# EUROPEAN PATENT SPECIFICATION

(11) **EP 4 279 564 B1**
(45) Date of publication and mention of the grant of the patent: **18.03.2026**
(21) Application number: 22739476.4
(22) Date of filing: 14.01.2022
(51) Int. Cl.: C09K 11/06, G02B 1/04, F21V 8/00, G01T 1/20

(54) **PLASTIC WAVELENGTH SHIFTING FIBER AND ITS MANUFACTURING METHOD**
KUNSTSTOFF-WELLENLÄNGENVERSCHIEBUNGSFASER UND IHR HERSTELLUNGSVERFAHREN
FIBRE DE DÉCALAGE DE LONGUEUR D'ONDE EN PLASTIQUE ET SON PROCÉDÉ DE FABRICATION

(30) Priority: 15.01.2021 JP 2021004762
(43) Date of publication of application: 22.11.2023
(73) Proprietor: Kuraray Co., Ltd., Kurashiki-shi, Okayama 710-0801 (JP)
(72) Inventor: AKARI, Masashi, Tainai-shi, Niigata 959-2691 (JP); KATOH, Yuichi, Tainai-shi, Niigata 959-2691 (JP); IWAKAWA, Ryuichi, Tainai-shi, Niigata 959-2691 (JP)
(74) Representative: Müller-Boré & Partner Patentanwälte PartG mbB
(86) International application number: PCT/JP2022/001038
(87) International publication number: WO 2022/154071

(56) References cited:
- WO-A1-2018/043383
- WO-A1-2018/043383
- WO-A1-2018/110536
- US-A- 5 606 638
- US-A- 5 606 638
- US-A1- 2014 332 689

## Description

### Technical Field

The present invention relates to a plastic wavelength shifting fiber and its manufacturing method.

### Background Art

Scintillators such as liquid organic scintillators, solid (plate-shaped) inorganic scintillators, and plastic scintillators have been widely used for a long time in the field of radiation detection such as particle detection, and are important components in the measurement of radiation. These scintillators contain a fluorescent agent that emits, when the scintillator is irradiated with radiation, blue light having a wavelength of about 430 nm, at which wavelength a photomultiplier tube has the maximum sensitivity. Note that a method in which blue light, which is emitted from a scintillator as it is irradiated with radiation, is not directly detected, but is indirectly detected by shifting the wavelength of the blue light generated by the scintillator into that of green light or the like in an optical fiber and making the obtained green light or the like propagate through the optical fiber has been known.

Such an optical fiber is called a wavelength shifting (WLS) fiber, in which the outer peripheral surface of a core that absorbs blue light generated by a scintillator and shifts its wavelength into that of green light or the like is covered (or coated) with a cladding having a refractive index lower than that of the core. In particular, plastic wavelength shifting fibers made of plastic are inexpensive and easy to process as compared to those made of glass. Therefore, like plastic scintillation fibers in which optical fibers themselves have scintillation properties, plastic wavelength shifting fibers are used in a wide range of applications such as particle physics researches.

As the base material for the core of a plastic wavelength shifting fiber, for example, polystyrene, which is a highly transparent resin material having a relatively high refractive index, is used. By using polystyrene as the base material for the core, a difference between refractive indices can be increased, thus making it possible to increase the total reflection angle with respect to the cladding. Therefore, it is possible to confine green light, which is generated by wavelength shifting inside the core, with a wider angle in the core and to transmit the confined green light to the end face of the fiber. That is, by using polystyrene as the base material for the core, it is possible to realize a wavelength shifting fiber having a high light emitting property.

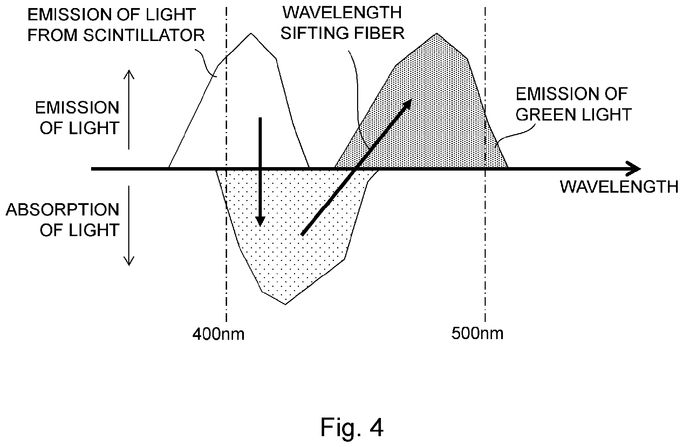

Fig. 4 shows a principle based on which green light is emitted inside the core of a wavelength shifting fiber when it is irradiated with blue light. An organic fluorescent agent that absorbs blue light having a wavelength of about 430 nm, i.e., absorbs light emitted from a scintillator, and shifts the absorbed blue light into green light having a wavelength of about 500 nm, is dissolved (i.e., contained) in the base material for the core. Therefore, as shown in Fig. 4, part or all of the blue light that has been generated in the scintillator and crossed the inside of the wavelength shifting fiber is absorbed inside the core and shifted into green light.

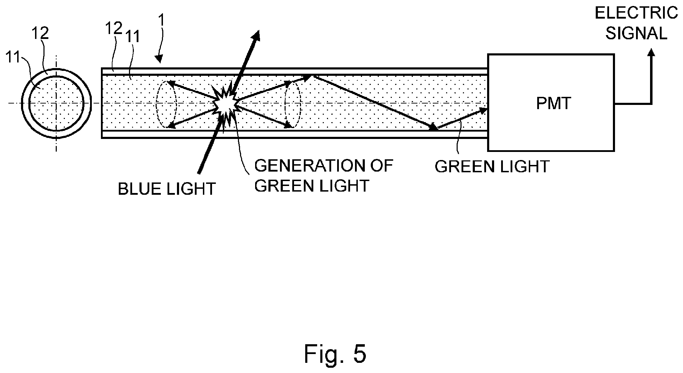

Further, Fig. 5 shows a schematic diagram of a detector using a wavelength shifting fiber. As shown in Fig. 5, as blue light having a wavelength of about 430 nm generated by a scintillator crosses the inside of a plastic wavelength shifting fiber 1, it is absorbed by a fluorescent agent contained in a core 11 and shifted into green light having a wavelength of about 500 nm. The green light generated inside the core 11 propagates in the both directions toward the both ends of the plastic wavelength shifting fiber 1 while repeating total reflection at the interface between the core 11 and the cladding 12. Then, the green light that has been guided to one of the ends of the plastic wavelength shifting fiber 1 is detected as an electric signal by a photomultiplier tube (PMT).

Instead of using the PMT shown in Fig. 5, for example, a semiconductor detector such as a silicon photodiode (Si-PM) using a silicon avalanche photodiode (Si-APD) may be used. Recently, for example, multi-pixel photon counter (MPPC) arrays in which a large number of small segmented Si-PMs are arranged are widely used. In such an MPPC array, each pixel is connected to a respective one of wavelength shifting fibers, so that green light generated in these wavelength shifting fibers can be simultaneously detected.

For detectors used in particle physics researches, it is important to distinguish an event(s) to be observed from noise events (background events), so it has long been desired to improve the temporal and position resolutions of detectors. Patent Literature 1 discloses a single-crystal solid scintillator in which the fluorescence lifetime is shortened in order to improve the temporal resolution of the detector. Each of Patent Literatures 2 and 3 discloses an inorganic scintillator that contains inorganic solid crystals and has a high temporal resolution.

Note that Patent Literatures 4 and 5 will be referred to later in descriptions of embodiments according to the present invention.

Patent Literature 6 describes high efficiency plastic and liquid scintillators which emit light when exposed to ionizing radiation and Patent Literature 7 describes a plastic scintillation fiber and its manufacturing method, which is particularly suitable for radiation detection in high dose fields.

### Citation List

### Patent Literature

Patent Literature 1: Japanese Unexamined Patent Application Publication No. 2003-248061
Patent Literature 2: Japanese Unexamined Patent Application Publication No. 2006-002084
Patent Literature 3: Japanese Unexamined Patent Application Publication No. 2014-013216
Patent Literature 4: Japanese Unexamined Patent Application Publication No. 2002-116327
Patent Literature 5: Japanese Unexamined Patent Application Publication No. 2009-104208
Patent Literature 6: US 5 606 638 A
Patent Literature 7: WO 2018/043383 A1

### Summary of Invention

### Technical Problem

It has been desired to improve the temporal resolution of a detector by further shortening the fluorescence lifetime in plastic wavelength shifting fibers. An object of the present invention is to provide a plastic wavelength shifting fiber in which the fluorescence lifetime is short.

### Solution to Problem

A plastic wavelength shifting fiber according to an aspect of the present invention includes:
a core containing a fluorescent agent having a peak of a fluorescence spectrum in a wavelength range of 430 to 550 nm; and
a cladding covering an outer peripheral surface of the core and having a refractive index lower than that of the core.

The number of carbonyl bonds in the fluorescent agent is one or smaller and the fluorescent agent is a bisstyryl-benzene-based compound or a bisvinylcarbazole-benzene-based compound.

In this way, it is possible to provide a plastic wavelength shifting fiber in which the fluorescence lifetime is short.

A method for manufacturing a plastic wavelength shifting fiber according to an aspect of the present invention is a method for manufacturing a plastic wavelength shifting fiber which includes:
a core containing a fluorescent agent having a peak of a fluorescence spectrum in a wavelength range of 430 to 550 nm; and
a cladding covering an outer peripheral surface of the core and having a refractive index lower than that of the core.

The method includes:
a step of inserting a rod for the core into a cylinder for the cladding, and thereby manufacturing a preform; and
a step of rod-drawing the preform while heating the preform, in which
the number of carbonyl bonds in the fluorescent agent is one or smaller and the fluorescent agent is a bisstyryl-benzene-based compound or a bisvinylcarbazole-benzene-based compound.

In this way, it is possible to provide a plastic wavelength shifting fiber in which the fluorescence lifetime is short.

A range of a peak wavelength of a fluorescence spectrum of the fluorescent agent may be 450 to 550 nm.

The fluorescent agent is a bisstyryl-benzene-based compound or a bisvinylcarbazole-benzene-based compound.

Further, an outer diameter of the plastic wavelength shifting fiber may be 0.1 to 3.0 mm.

### Advantageous Effects of Invention

According to the present invention, it is possible to provide a plastic wavelength shifting fiber in which the fluorescence lifetime is short.

### Brief Description of Drawings

Fig. 1 is a cross-sectional diagram of an example of a plastic wavelength shifting fiber according to a first embodiment;
Fig. 2 is a graph showing a relationship between numbers of carbonyl bonds in fluorescent agents and lifetimes of fluorescence;
Fig. 3 is a schematic diagram of an attenuation length measuring apparatus;
Fig. 4 is a diagram for explaining a principle based on which green light is emitted within the core of a wavelength shifting fiber when it is irradiated with blue light; and
Fig. 5 is a schematic diagram of a detector using a wavelength shifting fiber.

### Description of Embodiments

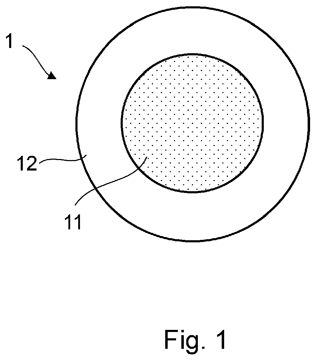

A plastic wavelength shifting fiber according to a first embodiment of the present invention will be described with reference to Fig. 1. Fig. 1 is a cross-sectional view of an example of a plastic wavelength shifting fiber according to an embodiment. As shown in Fig. 1, the plastic wavelength shifting fiber 1 according to this embodiment is circular in cross section, and includes a core 11 and a cladding 12 covering the outer peripheral surface of the core 11. The cladding 12 may have a multi-cladding structure by using the cladding 12 as an inner cladding, and further providing an outer cladding (not shown) having a refractive index lower than that of the inner cladding on the outer peripheral surface of the cladding 12. By adopting the multi-cladding structure, it is possible to capture (i.e., collect) light over a wider angle and make the captured light propagate through the fiber, so that the detection sensitivity is improved.

The core 11 is made of a transparent resin containing a fluorescent agent that absorbs blue light and emits green light. As the base material for the core, for example, a styrene-based resin, which is inexpensive and easy to use, is used. Details of the base material for the core and the fluorescent agent, which constitute the core 11, will be described later.

The cladding 12, which covers the outer peripheral surface of the core 11, is made of a transparent resin having a refractive index lower than that of the core 11. The base material for the cladding, which constitutes the cladding 12, will be described later.

The outer diameter of the plastic wavelength shifting fiber is, for example, 3.0 mm or smaller, and preferably 2.0 mm or smaller. Further, the outer diameter of the plastic wavelength shifting fiber is, for example, 0.1 mm or larger, and preferably 0.2 mm or larger.

In the plastic wavelength shifting fiber according to this embodiment, the number of carbonyl bonds contained in the fluorescent molecule is controlled. Therefore, in the plastic wavelength shifting fiber according to this embodiment, it is possible to shorten the fluorescence lifetime.

A principle for these features will be described hereinafter.

A more detailed description will be given with reference to the above-described Fig. 4.

Fluorescence is a phenomenon in which molecules of a fluorescent agent absorb energy and are excited, and then emit light having a wavelength longer than that of the absorbed light, and is a phenomenon that is often observed in π-conjugated organic compounds. The π-conjugated organic compound has a repetitive structure of double bonds and single bonds.

The inventors have conducted researches on various π-conjugated organic compounds that emit green fluorescence in a wavelength range of 430 to 550 nm, and in particular, a wavelength range of 450 nm to 550 nm as a preferred range, and found that the number of carbonyl bonds in the chemical structure of the fluorescent molecule has a correlation with the fluorescence lifetime emitted from the fluorescent agent. This is probably because carbon atoms and oxygen atoms are capable of forming double bonds, and greatly contribute to the π-conjugated structure in which double bonds are necessary. As a result of experiments, details of which will be described later, it has been found that the fluorescence lifetime is short when the number of carbonyl bonds is one or smaller. The fluorescence lifetime is preferably 3 ns or shorter.

Note that the term "carbonyl bond" in this specification means a double bond (C=O) between carbon and oxygen, and needless to say, examples of functional groups having carbonyl bonds include an amide group, an aldehyde group, and a ketone group.

### <Base Material for Core>

As the base material for the core, a transparent resin material having a relatively high refractive index is preferably used. A preferred base material is, for example, a polymer that is obtained by polymerizing one type of monomer selected from a group of monomers consisting of benzyl methacrylate, phenyl methacrylate, cyclohexyl methacrylate, chlorobenzyl methacrylate, 1-phenylethyl methacrylate, 1,2-diphenyl ethyl methacrylate, diphenyl ethyl methacrylate, furfuryl methacrylate, 1-phenylcyclohexyl methacrylate, pentachlorophenyl methacrylate, pentabromophenyl methacrylate, 1-naphthyl methacrylate, 2-naphthyl methacrylate, styrene, α-methylstyrene, and vinyltoluene.

Further, another suitable base material is a copolymer that is obtained by copolymerizing at least two types of monomers selected from a group of monomers consisting of methyl methacrylate, benzyl methacrylate, phenyl methacrylate, cyclohexyl methacrylate, chlorobenzyl methacrylate, 1-phenylethyl methacrylate, 1,2-diphenyl ethyl methacrylate, diphenyl ethyl methacrylate, furfuryl methacrylate, 1-phenylcyclohexyl methacrylate, pentachlorophenyl methacrylate, pentabromophenyl methacrylate, 1-naphthyl methacrylate, 2-naphthyl methacrylate, styrene, α-methylstyrene, and vinyltoluene. For the polymerization, an ordinary polymerization initiator(s) and an ordinary molecular-weight modifier(s) may be added.

### <Base Material for Cladding>

A suitable base material for the cladding is, for example, a polymer that is obtained by polymerizing or copolymerizing at least one type of monomer selected from a group of monomers consisting of methyl methacrylate, ethyl methacrylate, butyl methacrylate, propyl methacrylate, cyclohexyl methacrylate, methyl acrylate, ethyl acrylate, propyl acrylate, and butyl acrylate. Among them, a polymer of methyl methacrylate or a copolymer of methyl methacrylate and another monomer(s) is preferred. Methyl methacrylate has an advantage that its transparency is high, and it is easy to use because it is easily polymerized. For the polymerization, an ordinary polymerization initiator(s) and an ordinary molecular-weight modifier(s) may be added.

Further, as the base material for the outer cladding, a commercially available material may be used as long as it has a refractive index lower than that of the above-described base material for the cladding. Specifically, examples of suitable base materials include: polymers that are obtained by polymerizing or copolymerizing at least one type of monomer selected from a group of monomers consisting of methyl methacrylate, 2,2,2-trifluoroethyl methacrylate, 2,2,3,3-tetrafluoropropyl methacrylate, 2,2,3,3,3-pentafluoropropyl methacrylate, 2,2,3,4,4,4-hexafluorobutyl methacrylate, 2,2,3,3,4,4,5,5-octafluoropentyl methacrylate, methyl α-fluoroacrylate, and 2-(trifluoromethyl)methyl propenoate; and mixtures of the aforementioned polymers and polyvinylidene fluoride. In particular, a mixture of 2,2,2-trifluoroethyl methacrylate polymer and polyvinylidene fluoride is preferred.

### <Fluorescent Agent>

The fluorescent agent has a peak of a fluorescence spectrum in a wavelength range of 430 to 550 nm, preferably 450 to 550 nm, and absorbs blue light and shifts the wavelength of the absorbed blue light into that of green light. There are no restrictions on the above-described fluorescent agent as long as the number of carbonyl bonds is one or smaller and the fluorescent agent is a bisstyryl-benzene-based compound or a bisvinylcarbazole-benzene-based compound. In view of solubility in the plastic material of which the core is formed, the molecular weight of the fluorescent agent is preferably 200 to 1,000 and more preferably 300 to 700.

Examples of the bisvinylcarbazole-benzene-based compounds include styrylbenzene-based compounds such as 1,4-bis (2-(9-ethylcarbazol-3-yl) vinyl) benzene.

Examples of the bisstyryl-benzene-based compounds include 1,4-bis (4-(di-p-tolylamino) styryl) benzene.

Examples of the coumarin-based compounds not in accordance with the present invention include 3-(2-benzimidazolyl)-7-(diethylamino) coumarin.

When selecting a wavelength shifting fluorescent agent, it is preferred that its solubility in a monomer used as the raw material for the base material for the core, and in its polymer be high. The concentration of the fluorescent agent is preferably 30 to 10,000 mass ppm, more preferably, 50 to 1,000 mass ppm, and still more preferably 100 to 500 mass ppm is suitable. A preferred indicator for the concentration is the molar absorption coefficient of the fluorescent agent. For example, in the case of a wavelength shifting fiber having a diameter of 1 mm, the concentration of the fluorescent agent is adjusted so that it can absorb, while blue light emitted from the scintillator crosses (i.e., travels) a length of 1 mm inside the fiber, 70 to 99% of that blue light.

### <Manufacturing Method of Fiber>

There are no restrictions on the method for manufacturing a wavelength shifting fiber. For example, a preform rod is manufactured by inserting a transparent rod-shaped polymer for a core (a rod for a core) made of a base material having a high refractive index into a transparent cylindrical polymer for cladding (a cylinder for cladding) made of a base material having a low refractive index. After that, the tip of the manufactured preform is heated and thereby finely drawn.

The outer diameter, the length, and the like of the fiber are selected as appropriate according to the use conditions.

### <Manufacturing Method of Rod for Core>

A rod for a core can be manufactured by putting a monomer in a cylindrical polymerization container and performing thermal polymerization. As the polymerization method, a spontaneous polymerization that is performed by just heating the monomer without adding any initiator is preferred. However, a minimal amount of a thermal cleavage-type radical initiator may be added. Further, a photo cleavable-type radical initiator may be used in combination with the thermal cleavage-type radical initiator. Further, if the molecular weight of the rod for the core is too low, its mechanical strength and reliability required as an optical fiber may not be ensured. On the other hand, if the molecular weight is too high, the heating temperature needs to be raised because the viscosity of the molten material increases, thus possibly causing problems such as coloring caused by thermal degradation and thermal decomposition. Therefore, a molecular-weight modifier(s) may be added as required.

### <Manufacturing Method of Cylinder for Cladding>

A cylinder for cladding can be manufactured by charging thermoplastic resin pellets into a melt extruder equipped with a circular die and extruding them into a cylindrical shape. Alternatively, a method in which a monomer is pressed onto a side surface of a rotating cylindrical container by a centrifugal force, so that the monomer is polymerized and solidified while forming a hollow part, may be used. Alternatively, a method in which a hollow part is formed by drilling a hole at the axial center of a cylindrical polymer may be used.

### <Property of Fiber>

As described above, the concentration of the fluorescent agent is adjusted so that 70 to 99% of blue light can be absorbed at the outer diameter of the fiber. In the case of a single-cladding structure having an outer diameter of 1 mm, as an optical property of the fiber, the attenuation length AL is preferably longer than 300 cm (Attenuation Length AL > 300 cm). The attenuation length AL can be adjusted by changing the structure of the cladding, the type of the fluorescent agent, the concentration of the fluorescent agent, and/or the outer diameter of the fiber.

### [Examples]

The present invention will be described hereinafter in a more detailed manner by using examples, but is not limited by those examples at all. Example 3 is a Reference Example not in accordance with the present invention.

In Table 1, molecular structures, molecular weights, classifications, molecular formulas, numbers of carbonyl bonds, and lifetimes of fluorescence (ns) of fluorescent agents according to Examples 1 to 3 are summarized.

Note that the fluorescence lifetime was obtained by performing measurement on a solvent in which a fluorescent agent having a dilute concentration of about 10 ppm was dissolved in a styrene monomer by using a compact fluorescence-lifetime measuring apparatus Quantaurus-Tau manufactured by Hamamatsu Photonics K.K. As the excitation wavelength, light having a wavelength close to the peak wavelength was selected according to the absorption spectrum of the fluorescent agent-containing solvent.

**[Table 1]**

| | Example 1 | Example 2 | Example 3 |
|---|---|---|---|
| Structural Formula | 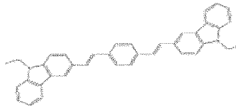 | 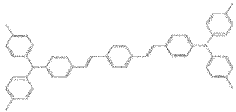 | 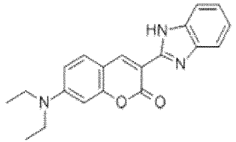 |
| Molecular Weight | 517 | 673 | 333 |
| Classification | bisvinylcarbazole benzene | bisstyrylbenzene | coumarin |
| Molecular Formula | C₃₈H₃₂N₂ | C₅₀H₄₄N₂ | C₂₀H₁₉N₃O₂ |
| Number of C=O bonds | 0 | 0 | 1 |
| Lifetime of Fluorescence (ns) | 0.9 | 1.1 | 2.4 |

### [Example 1]

A bisvinylcarbazole-benzene-based fluorescent agent listed in Table 1 was used. The number of carbonyl bonds was zero and the fluorescence lifetime was 0.9 ns.

### [Example 2]

A bisstyryl-benzene-based fluorescent agent listed in Table 1 was used. The number of carbonyl bonds was zero and the fluorescence lifetime was 1.1 ns.

### [Example 3]

A coumarin-based fluorescent agent listed in Table 1 was used. The number of carbonyl bonds was one and the fluorescence lifetime was 2.4 ns.

In Table 2, molecular structures, molecular weights, classifications, molecular formulas, numbers of carbonyl bonds, and lifetimes of fluorescence (ns) of fluorescent agents according to Comparative Examples 1 and 2 are summarized.

**[Table 2]**

| | Comparative Example 1 | Comparative Example 2 |
|---|---|---|
| Structural Formula | 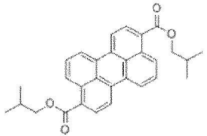 | 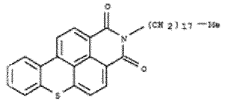 |
| Molecular Weight | 452 | 556 |
| Classification | perylene | thioxanthene |
| Molecular Formula | C₃₀H₂₈O₄ | C₃₆H₄₅NO₂S |
| Number of C=O bonds | 34 | 2 |
| Lifetime of Fluorescence (ns) | 3.8 | 7 |

### [Comparative Example 1]

A perylene-based fluorescent agent listed in Table 1 was used. The number of carbonyl bonds was two and the fluorescence lifetime was 3.8 ns.

### [Comparative Example 2]

A thioxanthene-based fluorescent agent listed in Table 1 was used. The number of carbonyl bonds was two and the fluorescence lifetime was 7.0 ns.

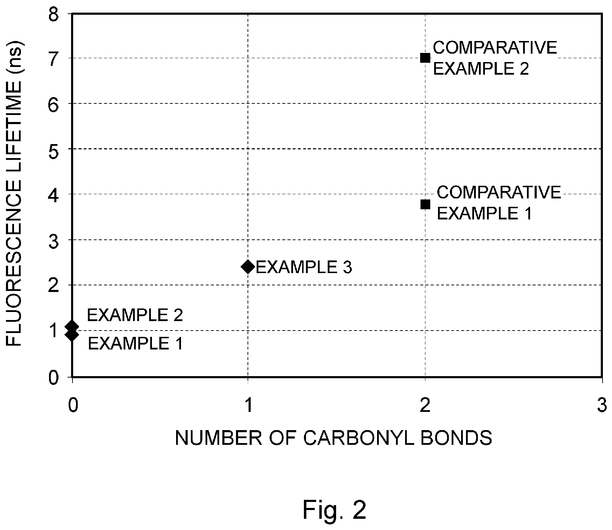

Here, Fig. 2 is a graph showing a relationship between numbers of carbonyl bonds in fluorescent agents and lifetimes of fluorescence. As shown in Tables 1 and 2, and in Fig. 2, when the number of carbonyl bonds is two or more, the fluorescence lifetime exceeds 3 ns, so it is undesirable.

Fibers using the fluorescent agents according to the Examples 1 to 3 and the Comparative Examples 1 and 2, respectively, were manufactured, and their attenuation lengths AL were evaluated.

### [Evaluation of Fluorescent Agent in Monomer Solvent]

### [Measurement of Absorption Spectrum]

The absorption spectrum was obtained by performing measurement on a solvent in which a fluorescent agent having a dilute concentration of about 10 ppm was dissolved in a styrene monomer by using a UV-Visible-IR Spectrophotometer UV3600 manufactured by Shimadzu Corporation. The measurement range of the spectrum was 300 to 700 nm.

### [Measurement of Fluorescence Spectrum]

The fluorescence spectrum was obtained by performing measurement on a solvent in which a fluorescent agent having a dilute concentration of about 10 ppm was dissolved in a styrene monomer by using a fluorescence spectrophotometer FluoroMax-4 manufactured by HORIBA, Ltd. In the measurement, the excitation wavelength was set to a wavelength at which the absorption by the respective fluorescent agent was maximized. The measurement range of the spectrum was 300 to 700 nm.

When the concentration of the fluorescent agent is high, the fluorescence spectrum of the fluorescent agent itself cannot be properly measured due to the reabsorption by the fluorescent agent. Therefore, the concentration of the fluorescent agent was set to 10 ppm.

### [Measurement of Quantum Yield QE]

The quantum yield QE was obtained by performing measurement on a solvent in which a fluorescent agent having a dilute concentration of about 10 ppm was dissolved in a styrene monomer by using an absolute PL quantum yield measuring apparatus Quantaurus-QY manufactured by Hamamatsu Photonics K.K. In the measurement, the excitation wavelength was set to a wavelength at which the absorption by the respective fluorescent agent was maximized.

### [Evaluation of Fiber Using Fluorescent Agent]

### [Manufacturing Method of Fiber]

Fibers containing the fluorescent agents according to the Examples 1 to 3 and the Comparative Examples 1 and 2, respectively, were manufactured in accordance with the methods disclosed in Patent Literatures 4 and 5. Each fiber had an outer diameter of 1 mm and a single-cladding structure. The concentration of the fluorescent agent was adjusted so that the fluorescent agent absorbs, while blue light crosses (i.e., travels) a length of 1 mm inside the fiber, 70 to 99% of that blue light.

### [Measurement of Attenuation Length AL]

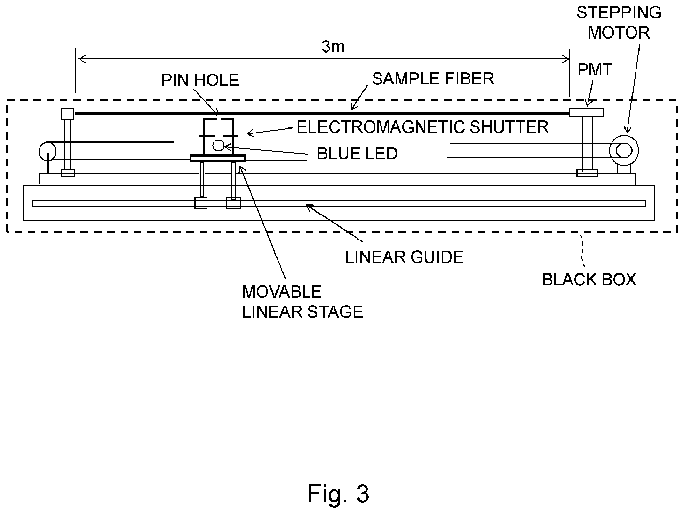

The attenuation lengths AL of the fibers were measured by using the apparatus shown in Fig. 3. Fig. 3 shows a schematic diagram of the attenuation length measuring apparatus. In the attenuation length measuring apparatus shown in Fig. 3, blue light was applied to (i.e., was made to enter) a sample fiber while changing a distance from a photomultiplier tube (PMT), and the intensity of the light that had been guided (i.e., had propagated) through the sample fiber was observed by the PMT. A blue LED having a peak wavelength at 470 nm was used as a light source. As the PMT, a photomultiplier tube R647 manufactured by Hamamatsu Photonics K.K. was used. Data for light-guiding distances (i.e., propagation distances) of 100 to 285 cm were used, and the attenuation length AL was calculated from a relational expression between the light-guiding distance and the detected intensity of the light.

As shown in Fig. 3, the attenuation length measuring apparatus is covered (i.e., enclosed) by a black box in order to block any light from the outside. The blue LED is disposed on a movable linear stage that can be moved in the longitudinal direction of the sample fiber. The movable linear stage is driven by a stepping motor and moves on a linear guide that extends in parallel with the sample fiber. Blue light emitted from the blue LED is made to enter the sample fiber through an electromagnetic shutter and a pinhole provided on the movable linear stage.

### [Evaluation Result]

In Table 3, results of the evaluations of the fluorescent agents and fibers using them according to the Examples 1 to 3 and the Comparative Examples 1 and 2, respectively, are summarized. In Table 3, from the top, concentrations (ppm) of the fluorescent agents, lifetimes (ns) of the fluorescent agents, quantum yields QE, absorption peak wavelengths (nm) of the fluorescent agents, emission peak wavelengths (nm), and attenuation lengths AL (cm) of the fibers are listed.

**[Table 3]**

| | Example 1 | Example 2 | Example 3 | Comparative Example 2 | Comparative Example 3 |
|---|---|---|---|---|---|
| Concentration of Fluorescent Agent (ppm) | 150 | 200 | 100 | 250 | 100 |
| Lifetime of Fluorescence (ns) | 0.9 | 1.1 | 2.4 | 3.8 | 7.0 |
| Quantum Yield QE | 0.93 | 0.89 | 0.79 | 0.77 | 0.81 |
| Absorption Peak Wavelength (nm) | 396 | 420 | 436 | 470 | 456 |
| Emission Peak Wavelength (nm) | 438 | 470 | 484 | 512 | 508 |
| Attenuation Length AL (cm) | 393 | 416 | 170 | 205 | 287 |

### [Example 1]

The quantum yield QE was 0.93 (QE=0.93), and the absorption peak wavelength was 396 nm. Further, the fluorescence peak wavelength was 438 nm. Under that condition that the concentration of the fluorescent agent was 150 ppm, the attenuation length AL of the fiber was 393 cm, which was longer than the target of 300 cm and hence was excellent.

### [Example 2]

The quantum yield QE was 0.89 (QE=0.89), and the absorption peak wavelength was 420 nm. Further, the fluorescence peak wavelength was 470 nm. Under that condition that the concentration of the fluorescent agent was 200 ppm, the attenuation length AL of the fiber was 416 cm, which was longer than the target of 300 cm and hence was excellent.

### [Example 3]

The quantum yield QE was 0.79 (QE=0.79), and the absorption peak wavelength was 436 nm. Further, the fluorescence peak wavelength was 484 nm. Under that condition that the concentration of the fluorescent agent was 100 ppm, the attenuation length AL of the fiber was 170 cm, which was shorter than the target of 300 cm.

### [Comparative Example 1]

The quantum yield QE was 0.77 (QE=0.77), and the absorption peak wavelength was 470 nm. Further, the fluorescence peak wavelength was 512 nm. Under that condition that the concentration of the fluorescent agent was 250 ppm, the attenuation length AL of the fiber was 205 cm, which was shorter than the target of 300 cm.

### [Comparative Example 2]

The quantum yield QE was 0.81 (QE=0.81), and the absorption peak wavelength was 456 nm. Further, the fluorescence peak wavelength was 508 nm. Under that condition that the concentration of the fluorescent agent was 100 ppm, the attenuation length AL of the fiber was 287 cm, which was shorter than the target of 300 cm.

The present invention is not limited to the above-described embodiments, and they may be modified as desired without departing from the scope of the appended set of claims.

### Reference Signs List

1 PLASTIC WAVELENGTH SHIFTING FIBER
11 CORE
12 CLADDING

## Claims

1. A plastic wavelength shifting fiber (1) comprising:
a core (11) containing a fluorescent agent having a peak of a fluorescence spectrum in a wavelength range of 430 to 550 nm; and
a cladding (12) covering an outer peripheral surface of the core (11) and having a refractive index lower than that of the core (11),
wherein
the number of carbonyl bonds in the fluorescent agent is one or smaller, and
the fluorescent agent is a bisstyryl-benzene-based compound or a bisvinylcarbazole-benzene-based compound.

2. The plastic wavelength shifting fiber (1) according to claim 1,
wherein a range of a peak wavelength of a fluorescence spectrum of the fluorescent agent is 450 to 550 nm.

3. The plastic wavelength shifting fiber (1) according to claim 1 or 2, wherein an outer diameter of the plastic wavelength shifting fiber (1) is 0.1 to 3.0 mm.

4. The plastic wavelength shifting fiber according to any one of claims 1 to 3, wherein the number of carbonyl bonds in the fluorescent agent is zero.

5. A method for manufacturing a plastic wavelength shifting fiber (1),
the plastic wavelength shifting fiber (1) comprising:
a core (11) containing a fluorescent agent having a peak of a fluorescence spectrum in a wavelength range of 430 to 550 nm; and
a cladding (12) covering an outer peripheral surface of the core (11) and having a refractive index lower than that of the core (11),
the method comprising:
a step of inserting a rod for the core (11) into a cylinder for the cladding (12), and thereby manufacturing a preform; and
a step of rod-drawing the preform while heating the preform,
wherein
the number of carbonyl bonds in the fluorescent agent is one or smaller, and
the fluorescent agent is a bisstyryl-benzene-based compound or a bisvinylcarbazole-benzene-based compound.

6. The method for manufacturing a plastic wavelength shifting fiber (1) according to claim 5, wherein a range of a peak wavelength of a fluorescence spectrum of the fluorescent agent is 450 to 550 nm.

7. The method for manufacturing a plastic wavelength shifting fiber (1) according to claim 5 or 6, wherein an outer diameter of the plastic wavelength shifting fiber (1) is 0.1 to 3.0 mm.

## Patentansprüche

1. Kunststoff-Wellenlängenverschiebungsfaser (1), umfassend:
einen Kern (11), der ein fluoreszierendes Mittel enthält, das einen Peak eines Fluoreszenzspektrums in einem Wellenlängenbereich von 430 bis 550 nm aufweist; und
eine Ummantelung (12), die eine äußere Umfangsoberfläche des Kerns (11) bedeckt und einen Brechungsindex aufweist, der niedriger ist als der des Kerns (11), wobei
die Anzahl von Carbonylbindungen in dem fluoreszierenden Mittel eins oder kleiner ist, und
das fluoreszierende Mittel eine Bisstyrylbenzol-basierte Verbindung oder eine Bisvinylcarbazolbenzol-basierte Verbindung ist.

2. Kunststoff-Wellenlängenverschiebungsfaser (1) nach Anspruch 1, wobei ein Bereich einer Peak-Wellenlänge eines Fluoreszenzspektrums des fluoreszierenden Mittels 450 bis 550 nm beträgt.

3. Kunststoff-Wellenlängenverschiebungsfaser (1) nach Anspruch 1 oder 2, wobei ein Außendurchmesser der Kunststoff-Wellenlängenverschiebungsfaser (1) 0,1 bis 3,0 mm beträgt.

4. Kunststoff-Wellenlängenverschiebungsfaser nach einem der Ansprüche 1 bis 3, wobei die Anzahl der Carbonylbindungen in dem fluoreszierenden Mittel null ist.

5. Verfahren zur Herstellung einer Kunststoff-Wellenlängenverschiebungsfaser (1),
wobei die Kunststoff-Wellenlängenverschiebungsfaser (1) umfasst:
einen Kern (11), der ein fluoreszierendes Mittel enthält, das einen Peak eines Fluoreszenzspektrums in einem Wellenlängenbereich von 430 bis 550 nm aufweist; und
eine Ummantelung (12), die eine äußere Umfangsoberfläche des Kerns (11) bedeckt und einen Brechungsindex aufweist, der niedriger ist als der des Kerns (11),
wobei das Verfahren umfasst:
einen Schritt des Einführens eines Stabs für den Kern (11) in einen Zylinder für die Ummantelung (12) und dadurch Herstellen einer Vorform; und
einen Schritt des Stabziehens der Vorform unter Erwärmen der Vorform, wobei
die Anzahl von Carbonylbindungen in dem fluoreszierenden Mittel eins oder kleiner ist, und
das fluoreszierende Mittel eine Bisstyrylbenzol-basierte Verbindung oder eine Bisvinylcarbazolbenzol-basierte Verbindung ist.

6. Verfahren zur Herstellung einer Kunststoff-Wellenlängenverschiebungsfaser (1) nach Anspruch 5, wobei ein Bereich einer Peak-Wellenlänge eines Fluoreszenzspektrums des fluoreszierenden Mittels 450 bis 550 nm beträgt.

7. Verfahren zur Herstellung einer Kunststoff-Wellenlängenverschiebungsfaser (1) nach Anspruch 5 oder 6, wobei ein Außendurchmesser der Kunststoff-Wellenlängenverschiebungsfaser (1) 0,1 bis 3,0 mm beträgt.

## Revendications

1. Fibre plastique de décalage de longueur d'onde (1) comprenant :
un noyau (11) contenant un agent fluorescent ayant un pic d'un spectre de fluorescence dans une plage de longueur d'onde de 430 à 550 nm ; et
une gaine (12) recouvrant une surface périphérique externe du noyau (11) et ayant un indice de réfraction inférieur à celui du noyau (11), dans laquelle
le nombre de liaisons carbonyle dans l'agent fluorescent est de un ou inférieur,
et
l'agent fluorescent est un composé à base de bisstyryle-benzène ou un composé à base de bisvinylcarbazole-benzène.

2. Fibre plastique de décalage de longueur d'onde (1) selon la revendication 1, dans laquelle une plage d'une longueur d'onde de pic d'un spectre de fluorescence de l'agent fluorescent est de 450 à 550 nm.

3. Fibre plastique de décalage de longueur d'onde (1) selon la revendication 1 ou 2, dans laquelle un diamètre externe de la fibre plastique de décalage de longueur d'onde (1) est de 0,1 à 3,0 mm.

4. Fibre plastique de décalage de longueur d'onde selon l'une quelconque des revendications 1 à 3, dans laquelle le nombre de liaisons carbonyle dans l'agent fluorescent est nul.

5. Procédé de fabrication d'une fibre plastique de décalage de longueur d'onde (1),
la fibre plastique de décalage de longueur d'onde (1) comprenant :
un noyau (11) contenant un agent fluorescent ayant un pic d'un spectre de fluorescence dans une plage de longueur d'onde de 430 à 550 nm ; et
une gaine (12) recouvrant une surface périphérique externe du noyau (11) et ayant un indice de réfraction inférieur à celui du noyau (11),
le procédé comprenant :
une étape consistant à insérer une tige pour le noyau (11) dans un cylindre pour la gaine (12), et fabriquer de ce fait une préforme ; et
une étape consistant à étirer la tige de la préforme tout en chauffant la préforme, dans lequel
le nombre de liaisons carbonyle dans l'agent fluorescent est de un ou inférieur, et
l'agent fluorescent est un composé à base de bisstyryle-benzène ou un composé à base de bisvinylcarbazole-benzène.

6. Procédé de fabrication d'une fibre plastique de décalage de longueur d'onde (1) selon la revendication 5, dans lequel une plage d'une longueur d'onde de pic d'un spectre de fluorescence de l'agent fluorescent est de 450 à 550 nm.

7. Procédé de fabrication d'une fibre plastique de décalage de longueur d'onde (1) selon la revendication 5 ou 6, dans lequel un diamètre externe de la fibre plastique de décalage de longueur d'onde (1) est de 0,1 à 3,0 mm.
